# FASCICULE DE BREVET EUROPEEN

(11) **EP 0 647 789 B1**
(45) Date de publication et mention de la délivrance du brevet: **03.05.2000**
(21) Numéro de dépôt: 94402243.3
(22) Date de dépôt: 06.10.1994
(51) Int. Cl.: F16D 1/06, F16H 57/02

(54) **Boîtier de différentiel**
Differential-Gehäuse
Differential casing

(30) Priorité: 12.10.1993 FR 9312107
(43) Date de publication de la demande: 12.04.1995
(73) Titulaire: Société Anonyme dite: REGIE NATIONALE DES USINES RENAULT, 92109 Boulogne Billancourt (FR)
(72) Inventeur: Houley, Daniel, F-78800 Houilles (FR); Raquin, Jean-Philippe, F-94310 Orly (FR)

(56) Documents cités:
- FR-A- 2 577 288
- FR-A- 2 580 349
- GB-A- 2 030 248

## Description

L'invention est relative à l'assemblage de deux éléments mécaniques en une pièce mécanique rigide capable de transmettre des couples très élevés. Plus précisément, elle concerne la fixation d'un élément métallique femelle de forme annulaire, tel qu'une couronne de différentiel, sur un élément métallique mâle, tel qu'un boîtier de différentiel.

On connaît diverses façons de fixer une couronne sur un boîtier de différentiel. Parmi celles-ci, les plus utilisées sont l'assemblage par vis ou par rivets.

La publication FR 2 580 349, de la demanderesse décrit un procédé d'assemblage particulier sans vis ni rivets, consistant à chauffer la couronne, à la présenter et à l'engager sur le boîtier jusqu'à ce qu'elle rencontre un talon prévu sur celui-ci, puis à déformer une extrémité du boîtier sur la couronne, par refoulement de matière sur une face de cette dernière. La couronne présente à cet effet sur la périphérie intérieure d'une de ses faces, un ensemble de crans lui permettant de s'incruster dans l'extrémité correspondante du boîtier.

Ce procédé d'assemblage, appliqué aujourd'hui dans la fabrication de boîtier de différentiels en fonte, permet d'obtenir une couronne sertie sur le boîtier, avec une liaison dont la résistance à la rupture est comparable à celle des liaisons classiques par vis ou par rivets. En revanche, lorsque le métal des éléments mâle et femelle présente un coefficient de dilatation plus élevé que la fonte, l'application de ce procédé ne permet pas de garantir une liaison suffisamment rigide pour résister aux couples transmis par un différentiel.

La présente invention vise à renforcer la liaison sertie d'un élément métallique femelle annulaire, tel qu'une couronne de différentiel, sur un élément mâle cylindrique, tel qu'un boîtier de différentiel.

Elle propose à cet effet, une pièce mécanique de transmission selon la revendication 1.

Selon un mode de réalisation de l'invention, l'élément mâle présente un surplus de matière au pied du talon.

Selon un mode de réalisation de l'invention, l'élément mâle présente un évidement ménagé dans le talon au-dessus du surplus de matière.

Selon un mode de réalisation de l'invention, les crans d'une première face latérale de l'élément femelle sont incrustés dans le surplus de matière.

Selon un mode de réalisation de l'invention, les crans d'une seconde face latérale de l'élément femelle sont incrustés dans la collerette.

L'invention concerne également un procédé d'assemblage d'une pièce mécanique, caractérisé en ce qu'il comporte les étapes suivantes :
- chauffage de l'élément femelle,
- présentation et engagement de l'élément femelle sur l'élément mâle jusqu'au talon de celui-ci entraînant l'incrustation des crans de la première face latérale dans la matière de l'élément mâle,
- déformation de la collerette de façon à replier celle-ci contre l'élément femelle en refoulant de la matière entre les crans de la seconde face latérale de celui-ci.

Selon un mode de réalisation de l'invention, les crans de la première face latérale sont incrustés dans le surplus de matière prévu au pied du talon, de façon à refouler de la matière à l'intérieur d'un évidement ménagé à cet effet dans la masse du talon.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 et une vue d'ensemble d'un boîtier de différentiel après fixation de sa couronne,
- la figure 2 représente en perspective le même boîtier, sans la couronne,
- la figure 3 est une vue en perspective de la couronne,
- les figures 4A, 4B et 4C sont respectivement une vue latérale de la couronne, un agrandissement partiel de cette vue et une coupe selon A,
- les figures 5A et 5D illustrant le montage de la couronne sur le boîtier, et
- la figure 6 est un agrandissement partiel de la figure 5A.

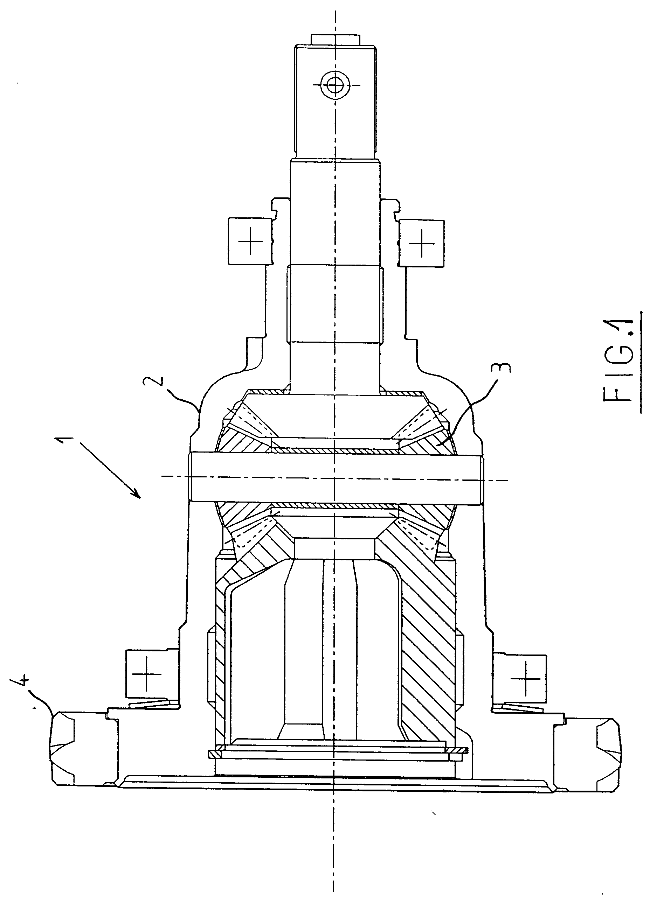

Le différentiel 1 représenté sur la figure 1 présente de façon classique un boîtier 2, à l'intérieur duquel est logé le mécanisme différentiel 3 proprement dit, et à l'extérieur duquel est fixé la couronne d'entrée du mouvement 4. Ce différentiel constitue un exemple de pièce mécanique de transmission sur laquelle l'invention trouve son application. Il est dépourvu de tout caractère limitatif quant à la portée de celle-ci.

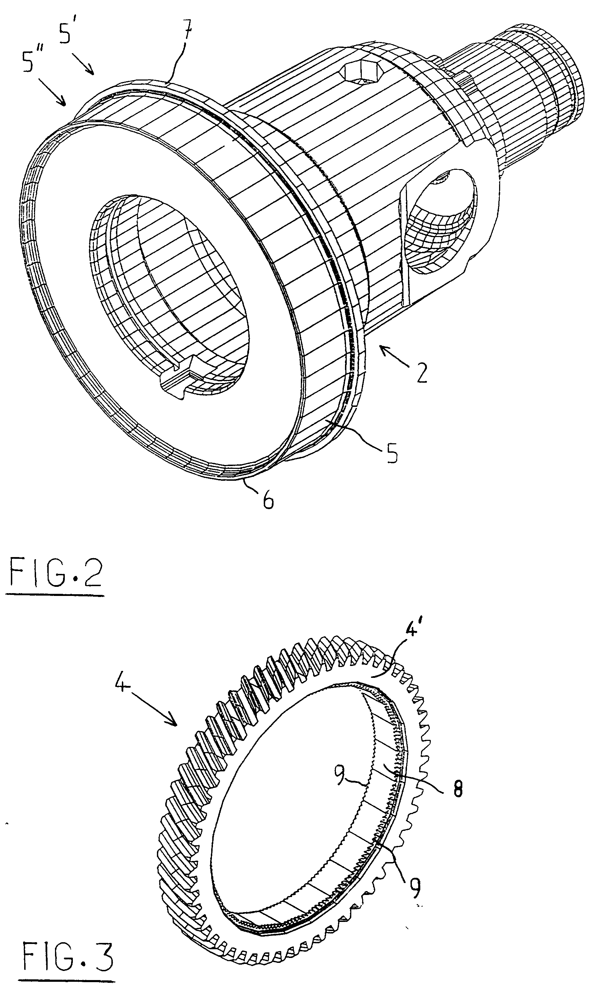

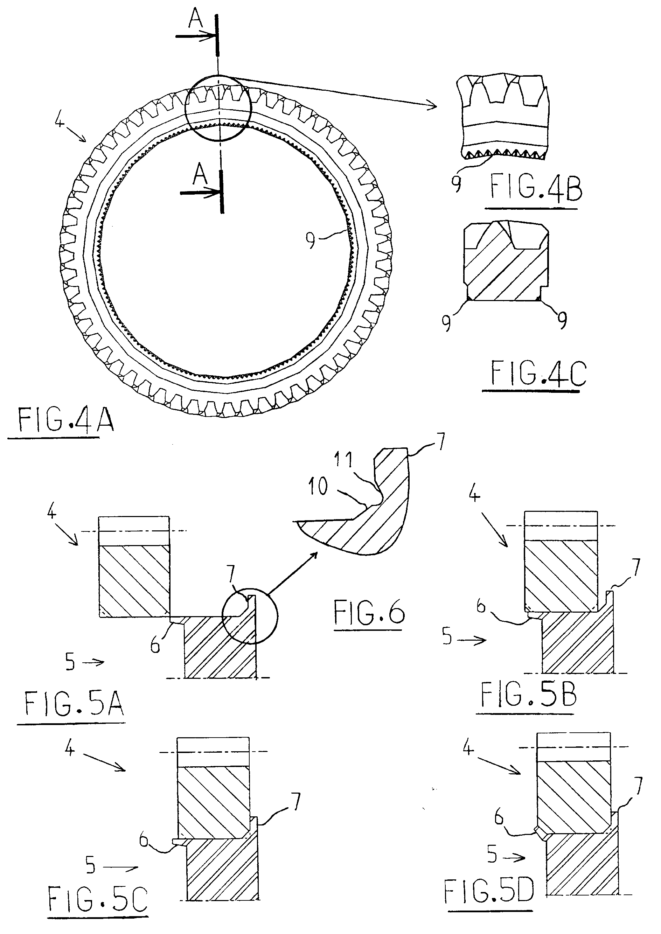

En se reportant aux figures 2 et 3, on reconnaît respectivement le boîtier 2 et la couronne 4. La figure 2 met en évidence que la partie extérieure cylindrique 5 du boîtier 2 qui constitue un élément mâle de forme cylindrique présentant à sa première extrémité 5' un talon 7 et à sa seconde extrémité 5'' une collerette 6. On remarquera également que la partie intérieure cylindrique 8 de la couronne 4 présente à ses deux extrémités, un ensemble de crans 9, s'étendant sur la périphérie intérieure de ses extrémités. Ces crans sont découpés sur toute la périphérie intérieure de chaque face latérale 4' de la couronne 4. Leur disposition est également illustrée par les figures 4A, 4B et 4C.

Les figures 5A à 5D décrivent l'engagement de l'élément femelle 4 sur l'élément mâle 5, entre les deux extrémités 5', 5'' de celui-ci. Elles font apparaître que le talon 7 est orthogonal à la surface extérieure de l'élément 5, sur la première extrémité 5' de celle-ci, tandis que la collerette 6 prolonge sa seconde extrémité 5'' vers l'extérieur. On remarque également la présence d'un surplus de matière 10, se présentant sous la forme d'un cordon annulaire, au pied du talon 7. L'agrandissement de la figure 6 permet enfin d'observer l'existence d'un évidement 11, ménagé dans la masse du talon 7, immédiatement au-dessus du surplus 10. Comme cela apparaît sur la figure 5D, lorsque l'élément femelle 4 est entièrement engagé sur l'élément mâle 5, les crans 9 de ses faces latérales 4' sont respectivement incrustés dans le surplus de matière 10 du talon 7, et dans la collerette 6, repliée à force contre l'élément femelle 4 lors du montage.

Ce montage s'effectue de la façon suivante :
- chauffage de l'élément femelle 4,
- présentation et engagement de l'élément femelle 4 sur l'élément mâle 5 jusqu'au talon 7, entraînant l'incrustation des crans 9 d'une première face 4' de l'élément femelle 4, appliquée contre le talon 7 dans le surplus de matière 10 et le refoulement correspondant de la matière dans les évidements 11,
- déformation de la collerette 6 de façon à replier celle contre l'élément femelle 4 en refoulant de la matière entre les crans 9 et une seconde face latérale 4' de l'élément femelle 4.

En conclusion, il faut souligner que le crantage des deux faces de l'élément femelle et l'implantation d'un cordon de matière au pied du talon de l'élément mâle proposés par l'invention permettent de renforcer considérablement la liaison mécanique entre deux éléments métalliques du type, cylindre et couronne, grâce à l'incrustation de matière sur les deux faces de la couronne. Comme indiqué précédemment l'invention trouve une application privilégiée, mais non exclusive dans la fixation d'élément transmettant des couples très importants, tels qu'une couronne de différentiel en métal à fort coefficient de dilatation, par exemple en aluminium, sur un boîtier du même métal, en vue d'éviter tout risque de rupture de la liaison de ces deux éléments, en cours de fonctionnement.

## Revendications

1. Pièce mécanique de transmission constituée d'une part d'un élément mâle de forme cylindrique (5) appartenant à un boîtier de différentiel, et d'autre part d'un élément femelle (4) tel qu'une couronne de différentiel engagée entre les deux extrémités de l'élément mâle (5), l'élément mâle (5) présentant à l'une de ses extrémités (5') un talon (7) orthogonal à sa surface extérieure, et à sa seconde extrémité (5'') une collerette (6) prolongeant celle-ci vers l'extérieur, caractérisée en ce que l'élément femelle (4) présente à la périphérie intérieure de ses deux faces latérales (4') des crans (9) engagés dans la matière de l'élément mâle (5).

2. Pièce mécanique selon la revendication 1, caractérisée en ce que l'élément mâle (5) présente un surplus de matière (10) au pied du talon (7).

3. Pièce mécanique selon la revendication 2, caractérisée en ce que l'élément mâle (5) présente un évidement (11) ménagé dans le talon (7) au-dessus du surplus de matière (4).

4. Pièce mécanique selon les revendications 1, 2 ou 3, caractérisée en ce que les crans (9) d'une première face latérale (4') de l'élément femelle (4) sont incrustés dans le surplus de matière (10).

5. Procédé d'assemblage d'une pièce mécanique conforme à l'une des revendications 1 à 4, caractérisé en ce qu'il comporte les étapes suivantes :
- chauffage de l'élément femelle (4),
- présentation et engagement de l'élément femelle (4) sur l'élément mâle jusqu'au talon (7) de celui-ci entraînant l'incrustation des crans (9) d'une première face latérale (4') de l'élément (4) dans la matière de l'élément mâle (5),
- déformation de la collerette (6) de façon à replier celle-ci contre l'élément femelle (4) en refoulant de la matière entre les crans (9) d'une seconde face latérale (4') de celui-ci.

6. Procédé d'assemblage d'une pièce mécanique selon la revendication 5, caractérisé en ce que les crans de la première face latérale (4') sont incrustés dans le surplus de matière (10) prévu au pied du talon (7), de façon à refouler de la matière à l'intérieur d'un évidement (11) ménagé à cet effet dans la masse du talon (7).

## Claims

1. Mechanical transmission part comprising, on the one hand, a male element of cylindrical shape (5) being part of a differential casing and, on the other hand, a female element (4) such as a differential crown wheel engaged between the two ends of the male element (5), the male element (5) having at one of its ends (5') a heel (7) orthogonal to its outside surface and, at its second end (5''), a collar (6) extending the latter in the outward direction, characterised in that the female element (4) has at the internal periphery of its two lateral faces (4') notches (9) engaged in the material of the male element (5).

2. Mechanical part according to Claim 1 characterised in that the male element (5) has excess material (10) at the base of the heel (7).

3. Mechanical part according to Claim, 2, characterised in that the male element (5) has a recess (11) formed in the heel (7) above the surplus material (4).

4. Mechanical part according to Claims 1, 2 or 3, characterised in the notches (9) of a first lateral face (4') of the female element (4) are embedded in the excess material (10).

5. Method of assembling a mechanical part according to one of Claims 1 to 4, characterised in that it comprises the following steps:
- heating up the female element (4),
- offering up and engaging the female element (4) on the male element up to the heel (7) of the latter bringing about the embedding of the notches (9) of a first lateral face (4') of the element (4) in the material of the male element (5).
- deformation of the collar (6) in such as way as to fold it up against the female element (4) whilst pushing back the material between the notches (9) of a second lateral face (4') of the latter.

6. Method of assembly a mechanical part according to Claim 5, characterised in that the notches of the first lateral face (4') are embedded in the excess material (10) provided at the base of the heel (7), in such a way as to push the material back inside a recess (11) formed for this purpose in the body of the heel(7).

## Patentansprüche

1. Mechanisches Getriebeteil, bestehend zum einen aus einem zylindrischen Steckelement (5), das zu einem Differentialgehäuse gehört, und zum anderen aus einem Aufnahmeelement (4), wie beispielsweise einem Tellerrad, welches zwischen den beiden Enden des Steckelementes (5) in Eingriff steht, wobei das Steckelement (5) an seinem einen Ende (5') einen sich senkrecht zur Außenfläche erstreckenden Ansatz (7) und an seinem zweiten Ende (5'') einen diese nach außen hin verlängernden Kragen (6) aufweist, dadurch gekennzeichnet, daß das Aufnahmeelement (4) am Innenumfang seiner beiden Seitenflächen (4') Zähne (9) aufweist, die mit dem Material des Steckelementes (5) in Eingriff stehen.

2. Mechanisches Bauteil nach Anspruch 1, dadurch gekennzeichnet, daß das Steckelement (5) am unteren Ende des Ansatzes (7) einen Materialüberschuß (10) aufweist.

3. Mechanisches Bauteil nach Anspruch 2, dadurch gekennzeichnet, daß das Steckelement (5) eine oberhalb des Materialüberschusses (10) in dem Ansatz (7) ausgebildete Aussparung (11) aufweist.

4. Mechanisches Bauteil nach den Ansprüchen 1, 2 oder 3, dadurch gekennzeichnet, daß die Zähne (9) einer ersten Seitenfläche (4') des Aufnahmeelementes (4) an den Materialüberschuß (10) angepreßt sind.

5. Verfahren zum Zusammenbau eines mechanischen Bauteils nach einem der Ansprüche 1 bis 4, dadurch gekennzeichnet, daß es die folgenden Arbeitsschritte umfaßt:
- Erwärmen des Aufnahmeelementes (4),
- Zuführen und Ineingriffbringen des Aufnahmeelementes (4) mit dem Steckelement bis zum Ansatz (7) desselben, was zum Anpressen der Zähne (9) einer ersten Seitenfläche (4') des Elementes (4) an das Material des Steckelementes (5) führt,
- Verformen des Kragens (6) in der Art, daß er an das Aufnahmeelement (4) umgebogen wird und dabei das Material zwischen den Zähnen (9) einer zweiten Seitenfläche (4') desselben aufstaucht.

6. Verfahren zum Zusammenbau eines mechanischen Bauteils nach Anspruch 5, dadurch gekennzeichnet, daß die Zähne der ersten Seitenfläche (4') so an den Materialüberschuß (10) am unteren Ende des Ansatzes (7) angepreßt werden, daß das Material im Inneren einer dafür in dem Körper des Ansatzes (7) ausgebildeten Aussparung (11) aufgestaucht wird.
